Europäisches Patentamt

European Patent Office

Office européen des brevets

(19)

(11) Veröffentlichungsnummer : **0 138 753**
**B1**

(12) EUROPÄISCHE PATENTSCHRIFT

(45) Veröffentlichungstag der Patentschrift :
12.11.86

(51) Int. Cl.⁴ : **C 09 C   1/20, C 08 K   3/24**

(21) Anmeldenummer : 84810390.9

(22) Anmeldetag : 06.08.84

(54) Monokline grünstichige Bleichromatpigmente.

(30) Priorität : 12.08.83 CH 4419/83
              12.01.84 CH 144/84

(43) Veröffentlichungstag der Anmeldung :
24.04.85 Patentblatt 85/17

(45) Bekanntmachung des Hinweises auf die Patenterteilung : 12.11.86 Patentblatt 86/46

(84) Benannte Vertragsstaaten :
AT BE CH DE FR GB IT LI NL SE

(56) Entgegenhaltungen :
DE-A- 1 807 891
GB-A- 1 186 203

(73) Patentinhaber : CIBA-GEIGY AG
Klybeckstrasse 141
CH-4002 Basel (CH)

(72) Erfinder : Boekel, Cornelius Pieter, Dr.
Kroepanweg 1
NL-8141 RA Heino (NL)
Erfinder : Erkens, Leonardus Johannes Hubertus, Dr.
d'Artagnaniaan 24
NL-6213 CK Maastricht (NL)
Erfinder : Pugin, André, Dr.
La Dollaz
CH-1634 Pont-la-Ville (CH)
Erfinder : Snijders, Jacobus Michiel Hubertus
Boviersdaal 13
NL-6228 GP Maastricht (NL)
Erfinder : Geurts, Herman Joseph Johannes Maria
Alexandereik 9
NL-6465 AX Kerkrade (NL)

## Beschreibung

Die Erfindung betrifft monokline grünstichige Bleichromatpigmente, die sich durch eine besonders grosse Feinheit der Pigmentteilchen und eine enge Teilchengrössenverteilung auszeichnen.

Bleichromatpigmente werden seit vielen Jahren in grossem Umfang zum Färben von plastischen Materialien und Anstrichstoffen verwendet. Bevorzugt sind Pigmente, die aus kleinen Teilchen mit geringen Grössenunterschieden bestehen. Die US-PS 2 212 917 beschreibt Bleichromatpigmente, die sich zwar durch eine kleine durchschnittliche Teilchengrösse (beispielsweise 0,45 μm) auszeichnen, wobei einzelne Teilchen jedoch eine Länge von bis zu 3,5 μm aufweisen können. Die DE-OS 1 807 891 beschreibt beschichtete Bleichromatpigmente, wovon mindestens 50 % der Pigmentteilchen eine Korngrösse von höchstens 1,4 μm und 10 % weniger als 4,1 μm und mehr aufweisen. Auch diese Pigmente lassen bezüglich Feinheit der Teilchen und Gleichmässigkeit der Teilchengrösse noch viel zu wünschen übrig.

Gegenstand der vorliegenden Erfindung sind monokline grünstichige Bleichromatpigmente enthaltend Bleichromat und Bleisulfat im Gew.-Verhältnis 59,9 : 40,1 bis 35 : 65, wobei die Pigmentteilchen einen Medianwert von 0,3-0,4 μm und 63-78 % der Teilchen einen Stokes'chen Durchmesser von 0,15-0,5 μm aufweisen.

Bevorzugt sind monokline Bleichromatpigmente, worin die Pigmentteilchen einen Medianwert von 0,3-0,4 μm und 65-72 % aller Teilchen einen Stokes'schen Durchmesser von 0,15-0,5 μm aufweisen.

Die erfindungsgemässen Bleichromatpigmente erhält man, wenn man die wässrige Lösung eines Bleisalzes, beispielsweise Bleiacetat, insbesondere Bleinitrat, mit der wässrigen Lösung eines Chromates, insbesondere Natrium- oder Kaliumchromat und eines Sulfates, beispielsweise Natrium- oder Kaliumsulfat oder Ammoniumsulfat unter hoher Turbulenz vermischt. Die Chromatlösung wird vorteilhaft durch Zugabe von Alkali zu einer Bichromatlösung vor oder während der Reaktion mit dem Bleisalz erzeugt.

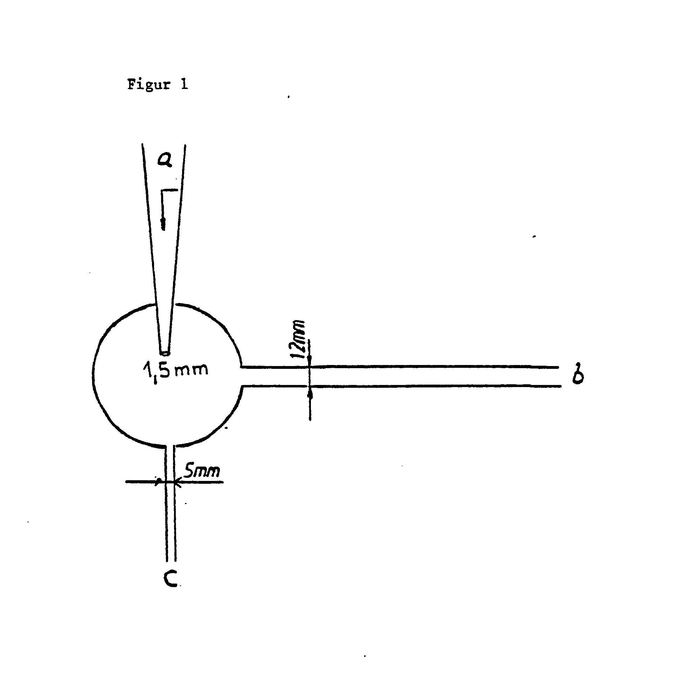

Die hohe Turbulenz kann auf verschiedene Art erreicht werden, beispielsweise durch kontinuierliche Vereinigung der zu vermischenden Lösungen in einer Mischdüse. Darunter ist eine Vorrichtung zu verstehen, bei welcher die zu vermischenden Lösungen auf verhältnismässig kleinem Raume miteinander vereinigt werden, wobei mindestens die eine Lösung, vorzugsweise unter erhöhtem Druck, durch eine Düse zugeführt wird. Die Mischdüse kann beispielsweise nach dem Prinzip der Wasserstrahlpumpe konstruiert sein, wobei die Zuführung der einen Flüssigkeit in der Mischdüse der Wasserzufuhr in der Wasserstrahlpumpe und die Zufuhr der anderen Flüssigkeit in der Mischdüse der Verbindung zu dem zu evakuierenden Gefäss in der Wasserstrahlpumpe entspricht und gegebenenfalls auch diese letztere Flüssigkeitszufuhr unter erhöhtem Druck erfolgt (siehe Fig. 1).

Zur Durchführung der Fällung in der Mischdüse wird zweckmässig die wässrige Lösung enthaltend das Chromat und das Sulfat bei einer Strömungsgeschwindigkeit von mindestens 4,9 m/sec mit der wässrigen Lösung des Bleisalzes bei einer Strömungsgeschwindigkeit von mindestens 0,08 m/sec kontinuierlich, vorzugsweise bei Zimmertemperatur vereinigt. Die Fällung wird vorzugsweise bei Raumtemperatur und einem pH von 3-5, zweckmässig in Gegenwart eines Ueberschusses an Bleiionen von 0,003-0,06 Mol pro Liter über die stöchiometrische Menge durchgeführt.

Eine andere Möglichkeit zur Erzeugung hoher Turbulenz bei der Vereinigung der Lösungen bieten im Handel erhältliche Hochleistungsrührer, wie z. B. der Ultra-Turrax der Fa. Janke und Kunkel KG, Staufen, BRD, der Ystral der Fa. Ystral GmbH, Ballrechten-Dottingen, BRD, der Polytron der Fa. Kinematica, Kriens-Luzern, CH, der Silverson-Rührer der Silverson Mach Ltd. Cheshem/UK oder der Chemcol-Mischer der Chemiecolor AG Kilchberg-Zürich, CH. Andere Typen von Hochleistungsrührern, die ebenfalls eingesetzt werden können, sind unter anderem der Pendraulik der Pendraulik Maschinen und Apparate GmbH, Bad Münder am Deister, BRD und Durchstrommischer wie z. B. jene der Firma Gronfa Process Technik BV/Rozendaal, NL. Dabei ist es wichtig, dass die Zugabe der Lösungen einerseits des Bleisalzes und andererseits des Chromates und Sulfates in der unmittelbaren Nähe des Schaftes beim Rotor des Hochleistungsrührers erfolgt. Die Vermischung der beiden Hauptkomponenten in der turbulenten Zone kann sowohl durch gleichzeitige Zuführung als auch durch Vorlage der einen und Zudosierung der zweiten Komponente geschehen. Im ersten Fall wird zweckmässig einerseits eine Chromatlösung sowie zusätzlich eine Sulfatlösung und andererseits eine Bleisalzlösung durch zwei separate Leitungen in die unmittelbare Nähe des Schaftes beim Rotor geführt. Im zweiten Fall wird zum Beispiel die Chromatlösung sowie die Sulfatlösung vorgelegt und die Bleisalzlösung durch ein Rohr in unmittelbarer Nähe des Schaftes beim Rotor des Hochleistungsrührers zugegeben.

Das ausgefällte Pigment zeichnet sich durch eine extrem niedrige Teilchengrösse aus. Zur besseren Ausbildung der Kristallstrukturen erweist sich ein Altern, beispielsweise durch Stehenlassen bei Raumtemperatur oder durch Erwärmen, als vorteilhaft.

Das erhaltene Pigment kann behandelt werden mit texturverbessernden Mitteln, beispielsweise langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner nichtionogenen, anionischen oder kationischen oberflächenaktiven Mitteln.

Zur Verbesserung der Stabilität gegen Wärme, Licht und chemische Angriffe ist es vorteilhaft, die Pigmentteilchen während der Fällung oder durch eine Nachbehandlung nach bekannten, beispielsweise in den US-PS 3 370 971, 3 639 133 und 4 046 588 beschriebenen Verfahren mit einem anorganischen Umhüllungsmittel zu überziehen.

Zu diesem Zweck wird auf dem Pigment eine anorganische Verbindung, beispielsweise eine Aluminium-, Silizium-, Antimon-, Zinn-, Cer-, Titan- oder Zirkonverbindung oder deren Kombinationen ausgefällt. Als vorteilhaft erweist sich eine Cer-Aluminium-Silikatschicht, die z. B. durch Zugabe der wässrigen Lösung von Cernitrat, eines Alkalisilikates und von Aluminiumsulfat zur wässrigen Pigmentsuspension.

Die Menge des Umhüllungsmittels beträgt zweckmässig 2-40, vorzugsweise 2-20 und insbesondere 3-10 % bezogen auf das Gesamtgewicht des Pigmentes.

Die Aufarbeitung des Pigmentes erfolgt auf die übliche Weise, beispielsweise durch Abfiltrieren, Auswaschen des Filterkuchens mit Wasser zur Entfernung löslicher Salze, Trocknen und Pulverisieren.

Die Bestimmung des Medianwertes $\overline{D}_z$ (siehe DIN 53206 Blatt 1, August 1972, S. 6) und der Teilchengrössenverteilung kann nach bekannten Methoden erfolgen, z. B. mit einer Scheibenzentrifuge [siehe The Particle Size Determination of Pigments with the Disc Centrifuge, K. Brugger, Powder Technology 13 (1976), 215-221]. Auf besonders einfache Art lassen sich Medianwert und Teilchengrössenverteilung mit dem von der Firma Horiba, Kyoto, Japan in den Handel gebrachten Zentrifugal-Teilchengrössenverteilungs-Analysator (Modell CAPA-500) ermitteln, wobei man Stokes'sche Durchmesser (siehe DIN 53206) und Gewichtsverteilungen erhält. Die ermittelten Werte gelten auch für Pigmente, die bis zu 10 % Umhüllungsmaterial enthalten.

Die Farbstärke wurde bestimmt nach einem Programm auf der Basis von DIN 53235 und einem 8°/d Messwinkel.

Die elektronenmikroskopischen Aufnahmen der erhaltenen Pigmente zeigen deutlich die grossen Vorteile dieser Pigmente. Zwei charakteristische Hauptmerkmale ragen heraus. Die hergestellten Teilchen sind kleiner und besitzen eine grössere Gleichmässigkeit als die herkömmlichen Produkte. Die erhaltenen Pigmente zeichnen sich in der Applikation durch höhere Farbstärke, grünstichigere Nuance, gute Deckfähigkeit, gute rheologische Eigenschaften und höhere Sättigung aus. Auffallend ist weiterhin der geringere Anteil an in verdünnten Säuren löslichen Bleisalzen, wie Carbonat- und Sulfatsalzen, im Vergleich zu bekannten Produkten vom gleichen Farbton.

Bei Pigmenten die mehr als 10 % Umhüllungsmaterial enthalten, können sich Medianwert und Teilchengrössenverteilung so stark verändern, dass sie nicht mehr in den oben definierten Bereich fallen. Auch solche Pigmente zeigen gegenüber den nach üblichen Methoden, beispielsweise gemäss US-PS 4 046 588, erhaltenen Pigmenten mit dem gleichen Anteil an Umhüllungsmaterial die erwähnten Vorteile in der Applikation wie höhere Farbstärke und Sättigung, einen grünstichigeren Farbton und bessere Deckfähigkeit.

Die erfindungsgemässen Pigmente können einzeln oder in Mischungen untereinander oder mit anderen Pigmenten, z. B. Phthalocyaninblau, Molybdatorange oder Berlinerblau zum Pigmentieren von hochmolekularem organischem Material verwendet werden, z. B. von Celluloseäthern und -estern, Acetylcellulose, Nitrocellulose, natürlichen Harzen oder Kunstharzen, wie Polymerisations- oder Kondensationsharze, z. B. Aminoplaste, insbesondere Harnstoff- und Melamin-Formaldehydharze, Alkydharze, Phenoplaste, Polycarbonate, Polyolefine, wie Polyäthylen oder Polypropylen, ferner Polystyrol, Polyvinylchlorid, Polyacrylnitril, Polyacrylsäureester, Gummi, Casein, Silicon und Silikonharze.

Die erwähnten hochmolekularen Verbindungen können sowohl als plastische Massen, Schmelzen oder in Form von Spinnlösungen, Lacken oder Druckfarben vorliegen. Je nach Verwendungszweck erweist es sich als vorteilhaft, die neuen Pigmente als Toner oder in Form von Präparaten zu verwenden.

In den nachfolgenden Beispielen und in der Beschreibung bedeuten die Teile, sofern nichts anderes angegeben, Gew.-Teile und die Prozente Gew.-Prozente. Die Medianwerte und die Teilchengrösseverteilung wurde mit dem CAPA-500 Analysator bei 3 000 Upm ermittelt. Die Menge Pigment muss so gewählt werden, dass die Absorption des Lichtstrahls zu Messbeginn zwischen 0,5 und 1,0 liegt. Die Pigmente wurden wie folgt dispergiert: 15 mg Pigment werden mit 100 mg Teepol®, HB6 (34 %ige Lösung des Na-Salzes eines sulfatierten primären Alkohols vom mittleren Mol.-Gew. 267 der Firma Shell) in einer Reibschale gut benetzt, und in einem 250 ml Erlenmeyerkolben mit insgesamt 100 ml destilliertem Wasser versetzt. Dann wird dieser Kolben während 10 Min. bei Raumtemperatur auf den Boden eines mit 1 l Wasser gefüllten Ultraschallbades (Bransonic 48 KHz der Firma Bransonic Europe B.V., Soest, NL) während 10 Minuten bei Raumtemperatur gestellt.

## Beispiel 1

In einer Mischdüse (siehe Fig. 1) bringt man bei Raumtemperatur und einer Strömungsgeschwindigkeit von 4,9 m/sec durch Rohr a eine wässrige Lösung enthaltend auf 1 000 Volumenteile 31,25 Teile Natriumbichromat ($Na_2Cr_2O_7 \cdot 2H_2O$), 28,6 Teile wasserfreies Natriumsulfat und 8,5 Teile 100 %iges Natriumhydroxid und durch Rohr b bei einer Strömungsgeschwindigkeit von 0,08 m/sec eine wässrige Lösung enthaltend auf 1 000 Volumenteile 146 Teile Bleinitrat und 2 Teile Natriumcarbonat gleichzeitig kontinuierlich zusammen. Während der Fällung ist der Ueberschuss an Bleiionen 0,003 Mol pro Liter über die stöchiometrische Menge. Nach der Fällung wird eine Lösung von 22,5 Teilen Natriumchlorid in 120 Teilen Wasser zugegeben, um die Kristallgrösse zu regulieren und anschliessend wird der pH durch Zugabe einer wässrigen Natriumcarbonatlösung auf 5,8 eingestellt. Der gebildete Niederschlag wird abfiltriert und mit Wasser frei von löslichen Salzen gewaschen und bei 80-90° getrocknet. Zusammensetzung der Bleisalze des Mischkristalles : 51 % $PbCrO_4$

49 % $PbSO_4$

Die mit dem CAPA-500-Analysator ermittelten Werte lauten :

Medianwert : 0,37 $\mu$m

Teilchengrössenverteilung : 66 % zwischen 0,15 und 0,5 $\mu$m.

Die relative Farbstärke nach DIN 53235 in Lacken im Vergleich zu einem nach einem herkömmlichen Verfahren erhaltenen Pigment gleicher Zusammensetzung beträgt 109 %.


## Beispiel 2

In einer Mischdüse (siehe Fig. 1) bringt man bei Raumtemperatur und einer Strömungsgeschwindigkeit von 4,9 m/sec durch Rohr a eine wässrige Lösung enthaltend auf 1 000 Volumenteile 31,25 Teile Natriumbichromat ($Na_2Cr_2O_7 \cdot 2H_2O$), 28,6 Teile wasserfreies Natriumsulfat und 8,5 Teile 100 %iges Natriumhydroxid und durch Rohr b bei einer Strömungsgeschwindigkeit von 0,08 m/sec eine wässrige Lösung enthaltend auf 1 000 Volumenteile 146 Teile Bleinitrat und 2 Teile Natriumcarbonat gleichzeitig kontinuierlich zusammen. Die Zufuhr der Lösungen wird so geregelt, dass während der Fällung stets ein Ueberschuss an Bleiionen von 0,003 Mol pro Liter über die stöchiometrische Menge vorhanden ist. Die erhaltene Pigmentsuspension verlässt die Düse durch Rohr c.

Nach der Fällung wird eine Lösung von 22,5 Teilen Natriumchlorid in 120 Teilen Wasser zugegeben, um die Kristallgrösse zu regulieren und anschliessend wird der pH durch Zugabe einer wässrigen Natriumcarbonatlösung auf 5,8 eingestellt. Zur Reifung der Kristallform lässt man den Niederschlag 8 Stunden absetzen. Zur Beschichtung der Pigmentteilchen wird die sich über dem Niederschlag befindliche Flüssigkeit dekantiert und anschliessend zur zurückbleibenden Pigmentsuspension 13 Teile Natriumsilikat (28 % $SiO_2$) in 120 Teilen Wasser unter Rühren bei Raumtemperatur gegeben.

Anschliessend wird eine Lösung enthaltend 20 Teile Aluminiumsulfat · $18H_2O$ und 10 Teile 52 %ige $HNO_3$ in 300 Teilen Wasser und danach eine Lösung von 1,4 Teilen Cerhydroxid in 3,7 Teilen 52 %iger $HNO_3$ ebenfalls unter Rühren bei Raumtemperatur zugegeben.

Der End-pH wird auf 4,5 eingestellt durch Zugabe von 12,5 Teilen Natriumcarbonat in 120 Teilen Wasser.

Der gebildete Niederschlag wird abfiltriert, frei von löslichen Salzen mit Wasser gewaschen und bei 80-90 °C getrocknet.

Zusammensetzung des Mischkristalles : 51 % $PbCrO_4$

49 % $PbSO_4$

Die mit dem CAPA-500-Analysator ermittelten Werte lauten :

Medianwert : 0,39 $\mu$m

Teilchengrössenverteilung : 66 % zwischen 0,15-0,5 $\mu$m.

Anteil der Umhüllung am Gesamtgewicht des Pigments : 5,5 %.

Die relative Farbstärke in Lacken nach DIN 53235 beträgt verglichen mit einem auf herkömmliche Art erhaltenen Pigment gleicher Zusammensetzung 118 %.

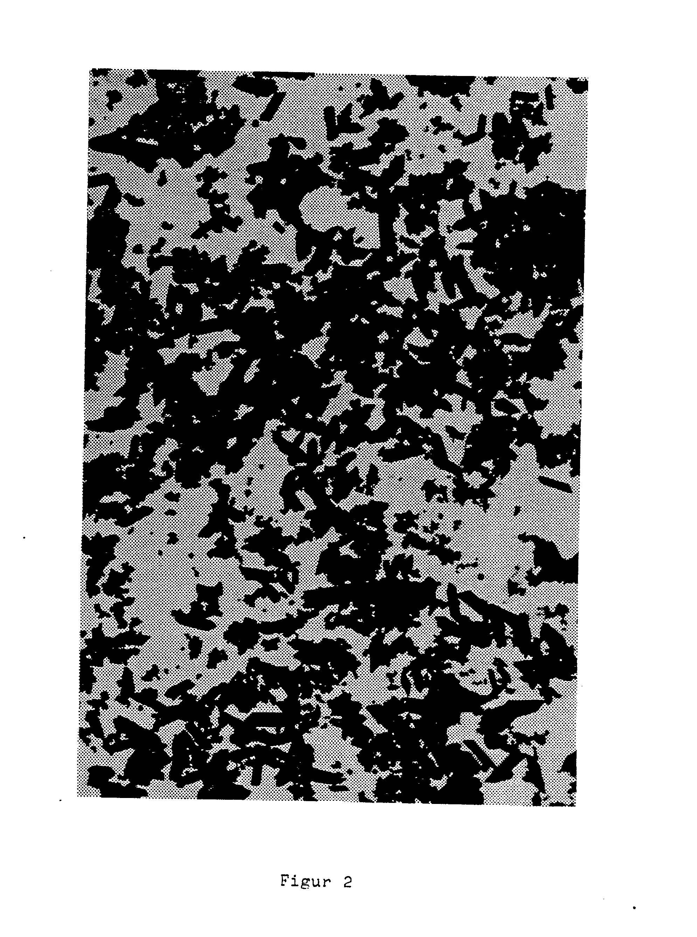

Fig. 2 zeigt eine Aufnahme im Elektronenmikroskop bei 20 000-facher Vergrösserung der in einem Alkohol-Wasser-Gemisch mit Ultraschall dispergierten Pigmentteilchen.

Der Farbton in Lacken (gemessen nach DIN 53235) des erfindungsgemässen Pigments ist so grünstichig wie ein rhombisches Bleichromatpigment.


## Beispiel 3

Stellt man nach dem im Beispiel 2 angegebenen Verfahren ein Pigment mit der Zusammensetzung 66 % $PbCrO_4$, 34 % $PbSO_4$ her, so zeigt es denselben Farbton wie das Vergleichsprodukt. Die relative Farbstärke ist dann 175 %.

Medianwert : 0,42 $\mu$m

Teilchengrösseverteilung : 56 % zwischen 0,15-0,5 $\mu$m.

Anteil der Umhüllung am Gesamtgewicht des Pigments : 5,5 %.


## Beispiel 4

In einer Mischdüse (siehe Fig. 1) bringt man bei Raumtemperatur und einer Strömungsgeschwindigkeit von 4,9 m/sec durch Rohr a eine wässrige Lösung enthaltend auf 1 000 Volumenteile 31,25 Teile Natriumbichromat ($Na_2Cr_2O_7 \cdot 2H_2O$), 28,6 Teile Natriumsulfat und 8,5 Teile Natriumhydroxid (100 %) und durch Rohr b bei einer Strömungsgeschwindigkeit von 0,08 m/sec eine wässrige Lösung enthaltend auf 1 000 Volumenteile 152,5 Teile Bleinitrat gleichzeitig kontinuierlich zusammen. Die Zufuhr der Lösungen wird so geregelt, dass während der Fällung stets ein Ueberschuss an Bleiionen von 0,009 2 Mol pro Liter über die stöchiometrische Menge vorhanden ist.

Nach der Fällung wird eine Lösung von 22,5 Teilen Natriumchlorid in 120 Teilen Wasser zugegeben, um die Kristallgrösse zu regulieren und anschliessend wird der pH durch Zugabe einer wässrigen Natriumcarbonatlösung auf 5,8 eingestellt.

Zur Reifung der Kristallstruktur lässt man den Niederschlag 8 Stunden absetzen.

Zur Beschichtung der Pigmentteilchen wird die über dem Niederschlag stehende Flüssigkeit dekantiert und zur zurückbleibenden Pigmentsuspension eine Lösung von 13 Teilen Natriumsilikat (28 % $SiO_2$) in 120 Teilen Wasser und anschliessend eine Lösung von 20 Teilen Aluminiumsulfat · $18H_2O$ und 10 Teilen 52 %iger Salpetersäure in 300 Teilen Wasser und darauf eine Lösung von 1,4 Teilen Cerhydroxid in 3,7 Teilen 52 %iger Salpetersäure unter Rühren bei Raumtemperatur gegeben. Der End-pH wird durch Zugabe von 12,5 Teilen Natriumcarbonat in 120 Teilen Wasser auf 4,5 eingestellt. Das erhaltene Pigment wird in üblicher Weise durch Filtration isoliert und zur Entfernung löslicher Salze mit Wasser gewaschen und bei 80-90 °C getrocknet.

Zusammensetzung des Mischkristalles : 50 % $PbCrO_4$
50 % $PbSO_4$

Medianwert : 0,35 μm

Teilchengrösseverteilung : 66 % zwischen 0,15-0,5 μm.

Anteil der Umhüllung am Gesamtgewicht des Pigments : 5,5 %

Die relative Farbstärke gegenüber einem auf herkömmliche Art erhaltenen Pigment gleicher Zusammensetzung beträgt 108 %.

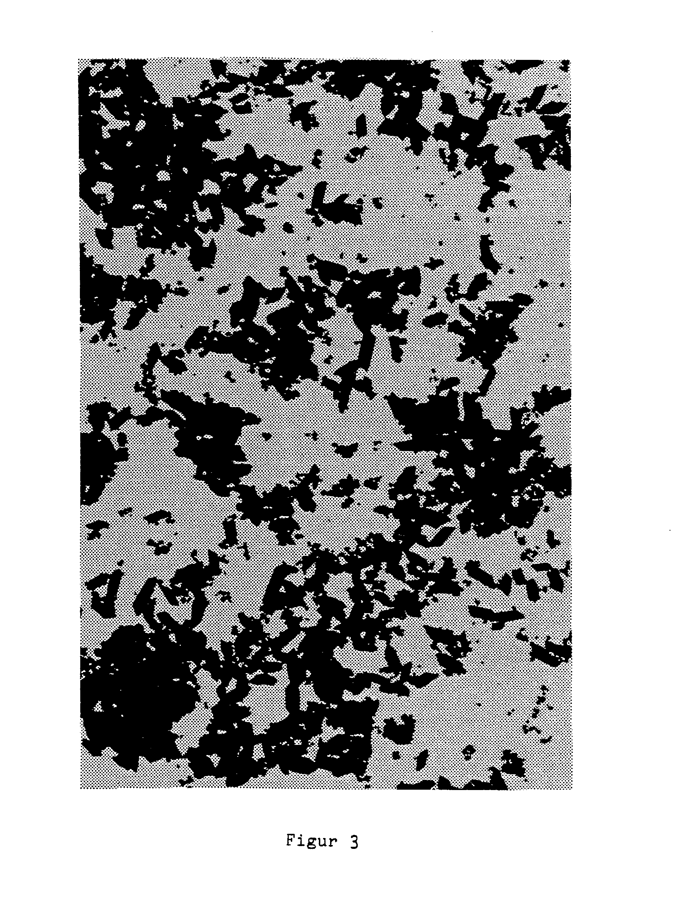

Fig. 3 zeigt eine Aufnahme im Elektronenmikroskop bei 20 000 facher Vergrösserung.

Der Farbton in Lacken ist, gemessen nach DIN 53235, wesentlich grünstichiger als der von bekannten Pigmenten gleicher Zusammensetzung.

## Beispiel 5

In einer Mischdüse (siehe Fig. 1) bringt man bei Raumtemperatur bei einer Strömungsgeschwindigkeit von 4,9 m/sec durch Rohr a eine wässrige Lösung enthaltend auf 1 000 Volumenteile 31,25 Teile Natriumbichromat ($Na_2Cr_2O_7 \cdot 2H_2O$), 28,6 Teile wasserfreies Natriumsulfat und 8,5 Teile 100 %iges Natriumhydroxid und durch Rohr b bei einer Strömungsgeschwindigkeit von 0,08 m/sec eine wässrige Lösung enthaltend auf 1 000 Volumenteile 146 Teile Bleinitrat und 2 Teile Natriumcarbonat gleichzeitig kontinuierlich zusammen. Die Zufuhr der Lösungen wird so geregelt, dass während der Fällung stets ein Ueberschuss an Bleiionen von 0,003 Mol pro Liter über die stöchiometrische Menge vorhanden ist. Nach der Fällung wird eine Lösung von 22,5 Teilen Natriumchlorid in 120 Teilen Wasser zugegeben, um die Kristallgrösse zu regulieren und anschliessend wird der pH durch Zugabe einer Natriumcarbonatlösung auf 5,8 eingestellt. Zur Reifung der Kristallform lässt man den Niederschlag 8 Stunden absetzen.

Zur Beschichtung der Pigmentteilchen wird die sich über dem Niederschlag befindliche Flüssigkeit dekantiert und anschliessend zur zurückbleibenden Pigmentsuspension eine Lösung von 95 Teilen Natriumsilikat (28 % $SiO_2$) in 200 Teilen Wasser unter Rühren bei Raumtemperatur gegeben.

Anschliessend wird eine Lösung von 20 Teilen Aluminiumsulfat · $18H_2O$ und 35 Teilen 52 %iger $HNO_3$ in 300 Teilen Wasser und danach eine Lösung von 1,4 Teilen Cerhydroxid in 3,7 Teilen 52 %iger $HNO_3$ unter Rühren bei Raumtemperatur zugegeben. Der End-pH wird auf 4,5 eingestellt durch Zugabe von 12,5 Teilen Natriumcarbonat in 120 Teilen Wasser.

Der gebildete Niederschlag wird abfiltriert, frei von löslichen Salzen mit Wasser gewaschen und bei 80-90 °C getrocknet.

Zusammensetzung des Mischkristalles : 50 % $PbCrO_4$
50 % $PbSO_4$

Anteil der Umhüllung am Gesamtgewicht des Pigments : 18 %

Die relative Farbstärke im Vergleich zu einem auf herkömmliche Art erhaltenen Pigment gleicher Zusammensetzung beträgt 113 %.

## Beispiel 6

In einem 5 l-Reaktionsgefäss mit Hochleistungsrührer (Rotordurchmesser 4 cm, Umfangsgeschwindigkeit 4 m/sec) bringt man 1 000 ml einer wässrigen Lösung enthaltend 32,25 g Natriumbichromat ($Na_2Cr_2O_7 \cdot 2H_2O$), 28,6 g wasserfreies Natriumsulfat und 8,5 g 100 %iges Natriumhydroxid und 1 000 ml einer wässrigen Lösung enthaltend 146 g Bleinitrat und 2 g Natriumcarbonat bei Raumtemperatur innerhalb von 2 Min. in der unmittelbaren Nähe des Schaftes beim Rotor des Hochleistungsrührers gleichzeitig in getrennten Rohren zusammen. Die Zufuhr des Lösungen wird so geregelt, dass während der Fällung stets ein Ueberschuss an Bleiionen von 0,003 Mol pro Liter über die stöchiometrische Menge vorhanden ist.

Nach der Fällung wird eine Lösung von 22,5 g Natriumchlorid in 120 ml Wasser zugegeben, um die Kristallgrösse zu regulieren und anschliessend wird der pH durch Zugabe einer wässrigen Natriumcarbonatlösung auf 5,8 eingestellt. Zur Reifung der Kristallform lässt man den Niederschlag 8 Stunden absetzen. Zur Beschichtung der Pigmentteilchen wird die sich über dem Niederschlag befindliche Flüssigkeit dekantiert und die zurückbleibende Pigmentsuspension mit einer Lösung enthaltend 13 g Natriumsilikat (28 % $SiO_2$) in 120 ml Wasser unter Rühren bei Raumtemperatur gegeben.

Anschliessend wird eine Lösung von 20 g Aluminiumsulfat · $18H_2O$ und 10 g 52 %iger $HNO_3$ in 300 ml Wasser und danach eine Lösung von 1,4 g Cerhydroxid in 3,7 g 52 %iger $HNO_3$ bei Raumtemperatur unter Rühren zugegeben.

Der End-pH wird auf 4,5 eingestellt durch Zugabe von 12,5 Teilen Natriumcarbonat in 120 Teilen Wasser.

Das erhaltene Pigment wird in üblicher Weise durch Filtration isoliert, zur Entfernung löslicher Salze mit Wasser gewaschen und bei 80-90 °C getrocknet.

Verhältnis der Bleisalze des Mischkristalles : 51 % $PbCrO_4$
49 % $PbSO_4$

Anteil der Umhüllung am Gesamtgewicht des Pigmentes : 5,5 %

Medianwert : 0,36 μm

Teilchengrösseverteilung : 69 % zwischen 0,15-0,5 μm

Die relative Farbstärke im Vergleich zu einem auf herkömmliche Art erhaltenen Pigment gleicher Zusammensetzung beträgt 115 %.

Der Farbton in Lacken, gemessen nach DIN 53235, ist wesentlich grünstichiger als der von bekannten Produkten gleicher Zusammensetzung.

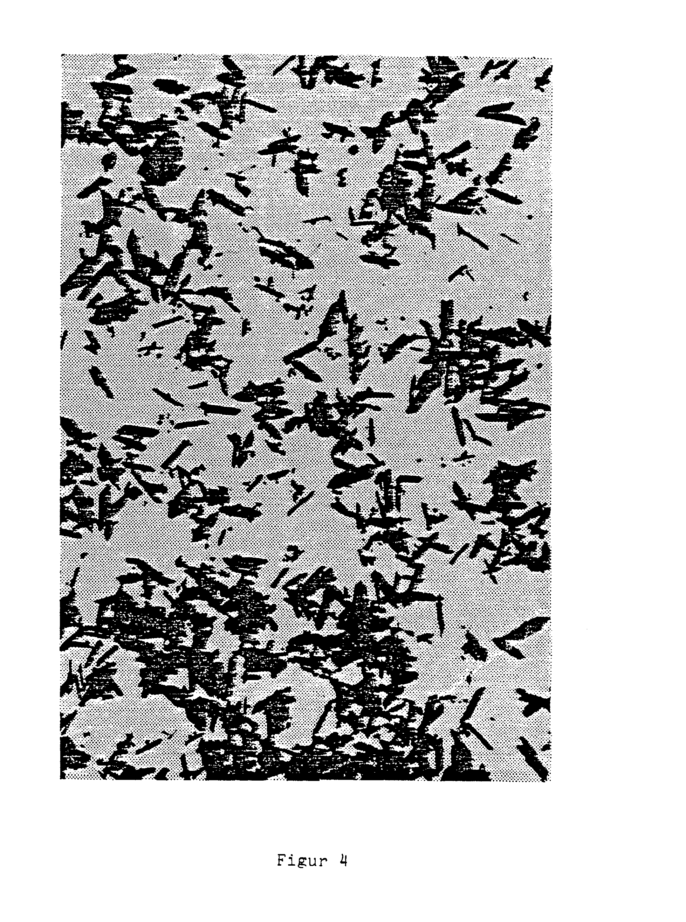

Fig. 4 zeigt eine Aufnahme der Pigmentteilchen im Elektronenmikroskop bei 20 000 facher Vergrösserung.

## Beispiel 7

In einem 5 l-Reaktionsgefäss mit Hochleistungsrührer (Durchmesser des Rotors 4 cm, Umfangsgeschwindigkeit des Rotors 4 m/sec) legt man 1 000 ml einer wässrigen Lösung enthaltend 139 g Bleinitrat und 1,7 g Natriumcarbonat vor. Nun gibt man in unmittelbarer Nähe des Schaftes beim Rotor des Hochleistungsrührers innerhalb von 2 Min. bei Raumtemperatur mittels eines Glasrohres 1 000 ml einer wässrigen Lösung enthaltend 40,2 g Natriumbichromat · $2H_2O$, 27,1 g wasserfreies Natriumsulfat und 10 g 100 %iges Natriumhydroxid zu. Nach der Fällung ist ein Ueberschuss an Bleiionen von 0,005 Mol pro Liter vorhanden. Um die Kristallgrösse zu regulieren wird eine Lösung von 25 g Natriumchlorid in 120 ml Wasser zugegeben. Anschliessend wird der pH auf 5,8 eingestellt durch Zugabe einer wässrigen Natriumcarbonatlösung. Zur Reifung der Kristallstruktur lässt man den Niederschlag während 8 Stunden absetzen. Zur Umhüllung der Pigmentteilchen wird die über dem Niederschlag stehende Flüssigkeit dekantiert und zur zurückbleibenden Suspension unter Rühren bei Raumtemperatur eine Lösung von 35,7 g Aluminiumsulfat · $18H_2O$ und 30 g Titanoxychlorid in 200 ml Wasser zugegeben. Danach werden 2,6 g Cerhydroxid in 7,8 ml 52 %iger $HNO_3$ zugegeben. Der End-pH wird durch Zugabe von 20 g Natriumcarbonat in 200 ml Wasser auf 5,0 eingestellt. Der Niederschlag wird abfiltriert, zur Entfernung löslicher Salze mit Wasser gewaschen und bei einer Temperatur von 80-90 °C getrocknet.

Verhältnis der Bleisalze im Pigment : $PbCrO_4$ 55 %
$PbSO_4$ 45 %

Anteil der Umhüllung am Gesamtgewicht des Pigments : 9 %.

Die relative Farbstärke gegenüber einem auf herkömmliche Art erhaltenen Pigment beträgt 119 %.

Die mit dem CAPA-500 Analysator ermittelten Werte lauten :

Medianwert 0,37 μm.

Teilchengrössenverteilung : 66 % zwischen 0,15 und 0,5 μm.

Der Farbton gemessen nach DIN 53235 ist in Lacken grünstichig.

## Beispiel 8

In einem 5 l-Reaktionsgefäss mit Hochleistungsrührer (Durchmesser des Rotors 4 cm, Umfangsgeschwindigkeit des Rotors 4 m/sec) legt man 1 000 ml einer wässrigen Lösung enthaltend 273 g Bleinitrat und 2,5 g Natriumcarbonat vor. Nun gibt man in unmittelbarer Nähe des Schaftes beim Rotor des Hochleistungsrührers mittels eines Glasrohres innerhalb 2 Min. bei Raumtemperatur 1 000 ml einer wässrigen Lösung enthaltend 67,4 g Natriumbichromat · $2H_2O$, 51,1 g wasserfreies Natriumsulfat und 18,3 Teile 100 %iges Natriumhydroxid zu. Nach der Fällung ist der Ueberschuss an Bleiionen von 0,008 mol pro Liter vorhanden. Der Niederschlag wird auf 65 °C erwärmt und eine Lösung von 5 g wasserfreies Natriumsulfat in 120 Teile werden zugegeben. Danach wird der pH mit etwa 13 g 52 %iger $HNO_3$ auf 2,5 eingestellt.

Anschliessend wird eine Lösung von 32,5 g Natriumsilikat (28 % $SiO_2$) und 10 g Natriumcarbonat in 120 ml Wasser zugegeben und danach eine Lösung von 10 g Antimontrioxid, 10 g Natriumfluorid und 27 g 52 %iger $HNO_3$ in 120 ml Wasser. Der End-pH wird auf 6,50 eingestellt durch Zugabe von etwa 8 g 100 %igem Natriumhydroxid in 120 ml Wasser. Der Niederschlag wird abfiltriert, zur Entfernung löslicher Salze mit Wasser gewaschen und bei einer Temperatur von 80-90 °C getrocknet.

Verhältnis der Bleisalze : $PbCrO_4$ 57 %
$PbSO_4$ 43 %

Die mit dem CAPA-500 Analysator ermittelten Werte lauten :
Medianwert 0,40 μm.
Teilchengrössenverteilung : 64 zwischen 0,15 und 0,5 μm.
Die relative Farbstärke im Vergleich zu einem nach einem herkömmlichen Verfahren erhaltenen Pigment gleicher Zusammensetzung wurde nach DIN 53235 ermittelt und beträgt 110 %.
Der Anteil der Umhüllung am Gesamtgewicht des Pigmentes beträgt 7,4 %.
Der Farbton gemessen nach DIN 53235 ist in Lacken deutlich grünstichig.

## Beispiel 9

0,6 Teile des gemäss Beispiel 1 erhaltenen Pigments werden mit 76 Teilen Polyvinylchlorid, 33 Teilen Dioctylphthalat, 2 Teilen Dibutylzinndilaurat und 2 Teilen Titandioxid zusammengemischt und auf dem Walzenstuhl während 15 Minuten bei 160 °C zu einer dünnen Folie verarbeitet. Die so erzeugte grünstichig gelbe Färbung ist farbstark, migrations- und lichtecht.

## Beispiel 10

0,05 Teile des gemäss Beispiel 1 erhaltenen Pigments werden mit 100 Teilen Polystyrol trocken gemischt. Das Gemisch wird bei Temperaturen zwischen 180 und 220 °C geknetet, bis eine homogene Einfärbung entstanden ist. Man lässt die gefärbte Masse abkühlen und vermahlt sie in der Mühle zu einer Teilchengrösse von etwa 2 bis 4 mm.
Das so erhältliche Granulat wird in einer Spritzgussmaschine bei Temperaturen zwischen 220 und 300 °C zu Formkörpern verarbeitet. Man erhält grünstichig gefärbte Massen von guter Lichtechtheit und Temperaturstabilität.

## Beispiel 11

60 Teile einer 60 %igen Lösung eines nicht-trocknenden Alkydharzes in Xylol (Handelsname Beckosol®, 27-320 der Firma Reichold-Albert-Chemie), 36 Teile einer 50 %igen Lösung eines Melamin-Formaldehyd-Harzes in einem Alkohol-Aromaten-Gemisch (Handelsname Super-Beckamin®, 13-501 der Firma Reichold-Albert-Chemie), 2 Teile Xylol und 2 Teile Methylcellosolve werden vermischt und 100 Teile dieses Gemisches werden mit Hilfe eines Rührers zu einer homogenen Lacklösung verrührt. 95 Teile des so erhaltenen Klarlackes und 5 Teile des Pigmentes gemäss Beispiel 1 werden in einer Kugelmühle während 72 Stunden gemahlen. Der eingefärbte Lack wird dann nach üblicher Spritzmethode auf ein Blech appliziert und 30 Minuten bei 120 °C eingebrannt. Man erhält eine Lackierung von guter Lichtechtheit.

## Patentansprüche

1. Monokline grünstichige Bleichromatpigmente enthaltend Bleichromat und Bleisulfat im Gew.-Verhältnis von 59,9 : 40,1 bis 35 : 65, dadurch gekennzeichnet, dass die Pigmentteilchen einen Medianwert von 0,3-0,4 μm und 63-78 Gewichtsprozent aller Teilchen einen Stokes'schen Durchmesser von 0,15-0,5 μm aufweisen.

2. Bleichromatpigmente gemäss Anspruch 1, dadurch gekennzeichnet, dass die Pigmentteilchen einen mittleren Medianwert von 0,3-0,4 μm und 65-72 Gewichtsprozent aller Teilchen einen Stokes'schen Durchmesser von 0,15-0,5 μm aufweisen.

3. Bleichromatpigmente gemäss Anspruch 1 enthaltend zusätzlich texturverbessernde und/oder oberflächenaktive organische Mittel.

4. Bleichromatpigmente dadurch erhältlich, dass auf den Bleichromatpigmenten gemäss Anspruch 1 während der Fällung oder durch eine Nachbehandlung ein Ueberzug eines anorganischen Umhüllungsmittels erzeugt wird.

5. Bleichromatpigmente gemäss Anspruch 4, enthaltend 2-40 % eines anorganischen Umhüllungsmittels.

6. Bleichromatpigmente gemäss Anspruch 4, enthaltend 2-20 % eines anorganischen Umhüllungsmittels.

7. Bleichromatpigmente gemäss Anspruch 4, enthaltend 3-10 % eines anorganischen Umhüllungsmittels.

8. Verfahren zur Herstellung von monoklinen Bleichromatpigmenten gemäss Anspruch 1, dadurch gekennzeichnet, dass man die wässrige Lösung eines Bleisalzes mit der wässrigen Lösung eines Chromates und eines Sulfates unter hoher Turbulenz vermischt.

9. Verfahren gemäss Anspruch 8, dadurch gekennzeichnet, dass man die Turbulenz durch hohe Strömungsgeschwindigkeit oder mechanisches Rühren erzeugt.

10. Verfahren gemäss Anspruch 8, dadurch gekennzeichnet, dass während der Fällung ein Ueberschuss an Bleiionen von 0,003-0,06 Mol pro Liter über die stöchiometrische Menge vorhanden ist.

**0 138 753**

11. Verfahren gemäss Anspruch 8, dadurch gekennzeichnet, dass man die erhaltenen Pigmente mit einer anorganischen Schutzhülle überzieht.

12. Hochmolekulares organisches Material enthaltend ein Bleichromatpigment gemäss Anspruch 1.

## Claims

1. A monoclinic greenish lead chromate pigment containing lead chromate and lead sulfate in a weight ratio of 59.9 : 40.1 to 35 : 65, wherein the pigment particles have a median value of 0.3-0.4 μm and 63-78 % by weight of all the particles have a Stockes diameter of 0.15-0.5 μm.

2. A lead chromate pigment according to claim 1, wherein the pigment particles have a median value of 0.3-0.4 μm and 65-72 % by weight of all the particles have a Stokes diameter of 0.15-0.5 μm.

3. A lead chromate pigment according to claim 1, which additionally contains texture-improving and/or surface-active organic agents.

4. A lead chromate pigment obtainable by producing during the precipitation or in the course of an aftertreatment a coating of an inorganic coating agent on the lead chromate pigment according to claim 1.

5. A lead chromate pigment according to claim 4, which contains 2-40 % of an inorganic coating agent.

6. A lead chromate pigment according to claim 4, which contains 2-20 % of an inorganic coating agent.

7. A lead chromate pigment according to claim 4, which contains 3-10 % of an inorganic coating agent.

8. A process for preparing a monoclinic lead chromate pigment according to claim 1, which comprises mixing an aqueous solution of a lead salt with an aqueous solution of a chromate and a sulfate under conditions of high turbulence.

9. A process according to claim 8, wherein the turbulence is created by high flow rates or mechanical stirring.

10. A process according to claim 8, wherein an excess of 0.003-0.06 mole of lead ions per litre over the stoichiometric amount is present during the precipitation.

11. A process according to claim 8, wherein the resultant pigment is coated with an inorganic protective coating.

12. High molecular weight organic material which contains a lead chromate pigment according to claim 1.

## Revendications

1. Pigments monocliniques verdâtres à base de chromate de plomb, contenant du chromate de plomb et du sulfate de plomb selon un rapport pondéral de 59,9 : 40,1 à 35 : 65, caractérisés en ce que les particules de pigments présentent une valeur médiane de 0,3-0,4 μm et en ce que 63 à 78 % en poids de toutes les particules ont un diamètre, déterminé selon la loi de Stokes, de 0,15 à 0,5 μm.

2. Pigments à base de chromate de plomb selon la revendication 1, caractérisés en ce que les particules de pigments présentent une valeur médiane de 0,3-0,4 μm et en ce que 65 à 72 % en poids de toutes les particules présentent un diamètre, déterminé selon la loi de Stokes, de 0,15 à 0,5 μm.

3. Pigments à base de chromate de plomb selon la revendication 1, contenant en outre des agents d'amélioration de la texture et/ou des agents organiques tensioactifs.

4. Pigments à base de chromate de plomb que l'on peut obtenir en produisant sur les pigments à base de chromate de plomb selon la revendication 1, pendant la précipitation par un traitement postérieur, un revêtement en un produit minéral d'enrobage.

5. Pigments à base de chromate de plomb selon la revendication 4, contenant 2 à 40 % d'un produit minéral d'enrobage.

6. Pigments à base de chromate de plomb selon la revendication 4, contenant 2 à 20 % d'un produit minéral d'enrobage.

7. Pigments à base de chromate de plomb selon la revendication 4, contenant 3 à 10 % d'un produit minéral d'enrobage.

8. Procédé pour préparer des pigments monocliniques à base de chromate de plomb selon la revendication 1, caractérisé en ce qu'on mélange sous haute turbulence la solution aqueuse d'un sel de plomb avec la solution aqueuse d'un chromate et d'un sulfate.

9. Procédé selon la revendication 8, caractérisé en ce qu'on produit la turbulence par une grande vitesse d'écoulement ou par agitation mécanique.

10. Procédé selon la revendication 8, caractérisé en ce que, pendant la précipitation, il y a présence d'un excès en ions plomb de 0,003 à 0,06 mole par litre par rapport à la quantité stœchiométrique.

11. Procédé selon la revendication 8, caractérisé en ce qu'on enrobe d'une enveloppe minérale protectrice les pigments obtenus.

12. Matière organique à poids moléculaire élevé, contenant un pigment à base de chromate de plomb selon la revendication 1.

8

Figur 1

Figur 2

Figur 3

Figur 4

4